# EUROPÄISCHE PATENTSCHRIFT

(11) **EP 1 410 650 B1**
(45) Veröffentlichungstag und Bekanntmachung des Hinweises auf die Patenterteilung: **09.10.2013**
(21) Anmeldenummer: 01937979.1
(22) Anmeldetag: 10.04.2001
(51) Int. Cl.: H04Q 3/545, H04M 7/00

(54) **TELEFONSYSTEM UND HILFSMITTEL FÜR DAS BETREIBEN DES SYSTEMS**
TELEPHONE SYSTEM AND DEVICE FOR OPERATING SAID SYSTEM
SYSTEME TELEPHONIQUE ET DISPOSITIF PERMETTANT DE FAIRE FONCTIONNER LEDIT SYSTEME

(30) Priorität: 11.04.2000 DE 10017957; 02.10.2000 DE 10048811
(43) Veröffentlichungstag der Anmeldung: 21.04.2004
(73) Patentinhaber: Gude, Michael, 50169 Kerpen (DE)
(72) Erfinder: Hoffmann, Uwe, 53909 Zülpich (DE); Hopf, Thomas, 42477 Radevormwald (DE)
(86) Internationale Anmeldenummer: PCT/DE2001/001387
(87) Internationale Veröffentlichungsnummer: WO 2001/078419

(56) Entgegenhaltungen:
- WO-A-98/32086
- WO-A-99/38312
- US-A- 6 038 555
- MULLER C ET AL: "ARTIFICIAL INTELLIGENCE IN TELECOMMUNICATIONS" PROCEEDINGS OF THE GLOBAL COMMUNICATIONS CONFERENCE (GLOBECOM). HOUSTON, NOV. 29 - DEC. 2, 1993, NEW YORK, IEEE, US, Bd. 2, 29. November 1993 (1993-11-29), Seiten 883-887, XP000427934
- ERFANI S ET AL: "POTENTIAL APPLICATIONS OF NEURAL NETWORKS IN NETWORK MANAGEMENT" PROCEEDINGS OF THE MIDWEST SYMPOSIUM ON CIRCUITS AND SYSTEMS. DETROIT, AUG. 16 - 18, 1993, NEW YORK, IEEE, US, Bd. 1 SYMP. 36, 16. August 1993 (1993-08-16), Seiten 257-260, XP000499420

## Beschreibung

Die Erfindung betrifft Telefone, Telefonanlagen und weitere Hilfsvorrichtungen für ein Telefonieren in gesonderten Netzen, insbesondere in Netzen für eine digitale Datenübertragung wie Computernetzwerken, die in sich geschlossen oder auch mit anderen Netzen verknüpft sind, bspw. über das Internet.

Es sind zwei zu unterscheidende Arten von Telefonanlagen bekannt.

Das klassische System weist eine Telefonzentrale auf, über die die Erledigung aller wichtigen Aufgaben erfolgt.

Virtuelle Telefonanlagen verzichten auf eine klassische Nebenstellenanlage und ersetzen sie durch eine im Prinzip ähnliche Lösung: PC, Netzwerkserver oder Gateway mit Gatekeeper. Dieses System ist wegen der direkten PC-Anbindung zwar flexibler und leistungsfähiger, trotzdem aber von einer zentralen Einrichtung abhängig.

Aus D2= US5754547 ist ein Verfahren zum Routing in einem Netwerk, wobei jede Routingvorrichtung eine Tabelle enthält, die Informationen über alle Endeinrichtungen des Netzwerks speichert, die von der IP Protokoll zum Routing der Pakete benutzt werden. Wenn sich eine neue Endeinrichtung sich an das Netzwerk anschließt, werden die Tabelle aller Routingvorrichtungen durch eine Broadcast-Meldung der neuen Endeinrichtung aktualisiert.

Das erfindungsgemäße neuronale Telefonsystem verzichtet völlig auf eine zentrale Instanz. Es existiert nur über eine Zusammenschaltung, bspw. über das Ethernet, gleichartiger Telefone, die alle notwendigen Funktionalitäten, weit über das übliche Maß der beiden anderen Systeme hinausgehend, in sich bergen. Die Ressourcen des Systems wachsen dabei durch jedes neu hinzukommende Gerät und es gibt theoretisch keine Grenze für dieses Wachstum, solange die Verbindungstopologie (bspw. das Ethernet) dies zulässt.

Für Verbindungen mit weiteren Systemen, insbesondere auch mit anderen Netzen, benötigt man eine zusätzliche Komponente, ein sogenanntes Gateway. Solche Gateways gibt es zum analogen Telefonnetz hin, zum ISDN, zu diverse Standleitungen und hin zu allen übrigen Systemen, die sich für die Telefonie eignen. Auch Gateways können in beliebiger Anzahl in das neuronale Telefonsystem integriert werden.

Die Komponenten des neuronalen Telefonsystems sind also Gateways (Router, ISDN, Standleitungen, usw.) und Terminals (Telefone, A/D-Wandler, a/b-Wandler, ISDN-Wandler usw.). Besonders vorteilhaft ist bei dem erfindungsgemäßen System die Möglichkeit, dass eine Integration von PC's, die in dem Netzwerk eingebunden werden sollen, sehr einfach zu realisieren ist. Dabei können alle Komponenten des Systems (auch die PC's) mit allen anderen Komponenten Verbindung aufnehmen, auch mit mehreren gleichzeitig, was ein wichtiges Kennzeichen des neuronalen Systems ist. PC's sind für die Funktion zwar nicht unbedingt notwendig, aber sehr sinnvoll. Sie können zu verschiedenen Zwecken eingesetzt werden: Administration, Wartung, Kontrolle, Monitoring, Installation, CTI, Call-Center, Zentrale usw. Die meisten dieser Funktionen werden in herkömmlichen Telefonsystemen durch spezielle Komponenten dargestellt. Auch bei den PC-Funktionen gilt das gleiche wie bei den Terminals und Gateways, es können beleibig viele vorhanden sein.

Für die IP-Telefonie gibt es eine prinzipielle Vorschrift, an die sich alle anderen (virtuellen) Lösungen halten, das H.323-Protokoll. Es ist jedoch ein neuronales System damit nicht zu realisieren. Das erfindungsgemäße Telefonsystem fußt zwar auch zu einem großen Teil auf H.323, aber mit wesentlichen Erweiterungen und Ergänzungen. Nach H.323 gibt es eine feste Orientierung der Terminals auf ein bestimmtes Gateway oder einen sogenannten Gatekeeper, der die Aufgabe einer gewöhnlichen Nebenstellenanlage übernimmt und auch auf mehrere Gateways koordinieren kann. Sollen Konferenzenschaltungen aufgebaut werden, wird eine MCU (multi control unit), ein weiteres Gerät, hierzu benötigt.

Gatekeeper ersetzt das erfindungsgemäße Telefonsystem komplett durch die eigene Organisation.

MCUs ersetzt das erfindungsgemäße Telefonsystem durch eigene Leistungsmerkmale in den Terminals.

Gateways können zwar hardwaremäßig vorgesehen sein, jedoch wird ein großer Teil der Funktionalität nach H.323 durch die Organisation der erfindungsgemäßen Terminals dargestellt. Insbesondere sind die Terminals gegenüber H.323 deutlich erweitert, insbesondere hinsichtlich der Firmware.

Zum Verständnis des neuronalen Telefonsystems wird vorausgeschickt, dass zwei grundverschiedene Arten der Kommunikation im Netzwerk, nämlich sogenannte Broadcasts und gezielte Adressierungen Verwendung finden. Beides ist im Grundsatz nicht neu und wird in anderer Anwedungen bereits genutzt, jedoch nicht in Verbindung mit Telefonsystemen.

Mit Broadcast werden Mitteilungen oder Anfragen paketweise blind ins Netz und damit an alle angeschlossenen Stationen geschickt, wobei der Absender mit im Paket steht. Aber auch normale, gezielte Datenpakete direkt an einen Empfänger sind möglich.

Ein weiterer Vorteil und eine Notwendigkeit des erfindungsgemäßen neuronalen Telefonsystems ist die Möglichkeit, fast beliebig viele Verbindungen gleichzeitig über das Netzwerk aufzubauen, was einem normalen Telefonsystem (analog, ISDN, GSM, DECT usw.) immer verwehrt war.

Immer wenn ein Ruf aufgebaut wird, erzeugt das erfindungsgemäße Terminal einen Broadcast, den soganannten Discovery-Aufruf. Dasselbe passiert, wenn ein Anruf von außen eingeht. Mit diesem Aufruf fragt das betreffende Gerät ins Netz, wer sich bitte unter der Nummer angesprochen fühlt. Darauf melden sich, dann gezielt, ein oder mehrere Geräte zurück. Meldet sich keines, wird der Aufruf wiederholt. Erfolgt auch dann keine Rückmeldung, wird eine geeignete Maßnahme ergriffen. Für ein Telefonsystem ist dies regelmäßig die Erzeugung eines Besetztzeichens, die Ausgabe einer entsprechenden Meldung, eines Sondertons, das Absetzen einer Meldung zu einem besonderen Terminal, über die TAPI-Schnittstelle oder mehrere der Möglichkeiten. Ein Gateway würde auch die Verbindung von draußen lösen, den Ruf an eine vorgegebene andere Nummer, bspw. eine Zentrale, weiterleiten, einen entsprechenden Eintrag im Log vornehmen, eine Signalisierung nach draußen vornehmen und dabei möglicherweise über DTMF eine alternative Nummer anfordern, oder mehrere dieser Möglichkeiten nutzen.

Gibt es wenigstens eine Rückmeldung, so gibt das Gerät den Aufruf solange erneut aus oder wartet auf ein Signal, dass der oder einer der angesprochenen Teilnehmer einer Gruppe abgenommen hat. Während einer bestehenden Verbindung können Terminals verschiedene Zustände, vor allem auf Tastendrücke broadcasten, auf die andere Geräte im System, z.B. netzwerkweite Aufzeichnungssysteme oder Einspieler, Monitoringsysteme für Statistik oder Abrechnung oder auch einfach nur andere Terminals wie Displays, Leuchtanzeigen usw. reagieren können. Beim Trennen der Verbindung und beim Auflegen des Hörers werden ebenfalls Broadcasts erzeugt, insbesondere auch bei einer von außen unterbrochenen Verbindung, bei der kein Hörer auflegt wurde. All diese Broadcasts können von allen Beteiligten des Systems gelesen werden und können somit Aktionen auch auslösen.

Ein erfindungsgemäßes Terminal kann bevorzugt mehrere Sprachverbindungen aufbauen, beispielsweise für Konferenzen oder getrennte Verbindungen für Hörer und Freisprecheinrichtungen. Auch die Verbindungen von Mikrofon und Lautsprecher können unterschiedlich geschaltet werden. Während man über das Mikrofon in einen Raum hineinhorchen kann (Babyphone), kann von einer völlig anderen Stelle aus in den Raum hineingesprochen werden (Durchsagen). Gleichzeitig kann mit demselben erfindungsgemäßen Telefon noch mit einem völlig anderen Teilnehmer telefoniert werden. Ebenfalls gleichzeitig kann das Terminal die gemischte Sprache bspw. an ein CTI-Terminal über die TAPI-Schnittstelle zur Aufzeichnung ausgeben oder von einer solchen Stelle empfangen und dem Telefonsignal aufmischen (Hintergrundmusik).

Die Vielfalt der möglichen Verbindungen und die sehr komplexe Vernetzung der Komponenten untereinander zeigt, welche Vorzüge ein neuronales Telefonsystem aufweist und um wie viel leistungsfähiger ein solches System ist, verglichen mit den klassischen und virtuellen Systemen.

Das neuronale System nach der Erfindung weist eine große Anzahl einzelner Merkmale auf, die eine Vielzahl unterschiedlichster Funktionen erlauben. Je nach Vorgabe des Systems gibt es eine ganze Reihe einzeln beschreibbarer Zusammenhänge und Lösungen beispielsweise hinsichtlich des ankommenden Rufs, des abgehenden Rufs, dabei auch jeweils lokal und über verschiedene Gateways, der Konfigurationsaufrufe, der Informationsaufrufe, der TAPI-Schnittstellen, der CAPI-Schnittstellen, der Display-Broadcasts, usw.. Das System ist sehr lebendig und es können ohne weiteres neue Merkmale hinzukommen und alte abgeändert werden.

Nachstehend werden einzelne Komponenten des erfindungsgemäßen Telefonsystems näher erläutert.

### Dezentrale Gateways

Das Prinzip des neuronalen Telefonsystems besteht in dem dezentralen Aufbau der Kommunikationsanlage. Dezentrale Gateways sind deshalb auch Bestandteil dieses Systems. Dagegen ist bei bekannten IP-Telefoniesystemen das Gateway ein zentraler Bestandteil der Anlage. Allein hieran wird bereits der Unterschied zwischen den Systemen deutlich.

Das Schutzbegehren erstreckt sich somit auch auf das Konzept der verteilten, dezentralen Gateways ohne gesonderte interne Verbindung, auch wenn der Rest des Systems nicht den Regeln eines neuronalen Telefonsystems folgt.

Dezentrale Gateways weisen weitere Vorteile noch auf. So können Gateways in verschiedenen Teilnetzen, z.B. bei mehreren Niederlassungen eines Unternehmens in verschiedenen Städten, die untereinander durch Datenfestverbingungen zusammengeschlossen sind, sich gegenseitig vertreten und man kann den Übergang ins öffentliche Netz an den Ort verlegen, von dem aus dieser Übergang am günstigsten ist, bspw. hinsichtlich der Kosten, der Qualität der Verbindung oder dergleichen mehr.

Dies ist zwar grundsätzlich auch durch eine zentrale vermittelnde Instanz in miteinander kommunizierenden Niederlassungen möglich, das erfindungsgemäße Konzept ermöglicht solches jedoch ohne übergeordnete zentrale Verwaltung.

### Trennung von Freisprecheinrichtung und Telefon

Herkömmliche Telefone besitzen regelmäßig eine Freisprecheinrichtung, die ebenso wie ein Headsetanschluß immer nur dieselben Signale verarbeitet wie der Hörer, entweder wahlweise oder gleichzeitig. Dies ist allgemein sinnvoll, weil normale Telefone auch immer nur eine Verbindung nach außen (gleichzeitig) halten können. Telefone, die einen oder mehrere zusätzliche a/b-Wandler beinhalten, stellen Geräte mit eingebauter Mini-Nebenstellenanlage dar und ermöglichen interne Verbindungen oder über ISDN zwei gleichzeitige externe.

Die hier vorgestellte Neuerung weist das Merkmal auf, dass für alle akustischen Endeinrichtungen eines Telefons getrennte Signalwege vorgesehen sind. Dies ist hier möglich, weil über ein Datennetzwerk fast beliebig viele Verbindungen gleichzeitig realisiert werden können.

Realisiert wird diese Technik dadurch, dass im Telefon alle akustischen Teile (Mikrofon, Lautsprecher, Hör- und Sprechkapsel in Hörer und Headset) an eigene Codecs angeschlossen werden. Diese Codecs werden durch ein zentrales Prozessorsystem verwaltet, das auch die Verbindungen zum Ethernet managed.

### Telefonzentrale im neuronalen Telefonsystem

In jedem besseren konventionellen Telefonsystem ist eine Telefonzentrale vorgesehen. Diese ist entweder ein besonderes Zentralentelefon oder ein PC-Anschluß an der Anlage. Im allgemeinen ist die Zentrale auch an einen bestimmten Ort gebunden. Ein Zenralen-PC wie auch wesentliche Bestanteile eines Zentralentelefons können zwar fernbedienbar sein und ist damit die Funktion der Zentrale räumlich verlegbar, jedoch ist das System immer noch abhängig von der zentralen Anlage.

In einem virtuellen Telefonsystem übernimmt ein Server die zentralen Aufgaben. Dieser kann Funktionen an andere PCs im Netz auslagern, aber es besteht auch dort immer die Abhängigkeit vom Server.

Hier zeigt das neuronale Telefonsystem seine Vorteile. Da alle am System beteiligten Geräte ständig Broadcasts über ihre Zustände erzeugen, kann auf jedem PC im System eine Telefonzentralensoftware laufen, auch gleichzeitig.

Für die Realisation braucht man lediglich eine zusätzliche Funktion. Eine Zentralensoftware erzeugt einen Broadcast, der alle Geräte im System dazu auffordert eine Meldung über ihren Zustand abzugeben. Dies ist notwendig, da eine Zentralensoftware nach dem Start nicht den aktuellen Zustand des Systems kennt und sich zunächst informieren muß.

Neben der großen Zentralenlösung lassen sich so auch kleine Lösungen realisieren, die nur ausgewählte Informationen anzeigen oder nur ausgewählte Eingriffe ermöglichen. Eine Zentrale kann, wenn sie entsprechend berechtigt ist, Verbindungen trennen, umleiten, abhorchen, Konferenzen aufbauen, statistische Daten erzeugen, Gebührendaten erfassen, auswerten, Projekte verwalten, erstellen, abrechnen usw. Dies ist möglich, weil die Zentrale mit jedem Gerät im System Daten austauschen kann, dessen Meldungen auswerten und sogar Konfigurationen ändern kann, bspw. Umleitungen schalten, CTI-Funktionen, Ansagen programmieren usw.

Auch diese Funktionen stellen einen Vorteil des erfindungsgemäßen Systems gegenüber den herkömmlichen dar.

Ähnliche Funktionen waren bisher nur begrenzt und aufwendig mit Gatekeepern nach H.323 möglich, was insbesondere auch den Nachteil einer zentralen Instanz hat, ohne die eine Funktion des herkömmlichen Systems nicht gewährleistet ist. Diese beschriebene Zentralenfunktion ist für das Funktionieren des erfindungsgemäßen neuronalen Telefonsystems nicht notwendig.

### Telefon mit Gateway

Das Konzept der IP-Telefonie ist noch sehr jung. Sowohl die einschlägige Normung (ITU-T, H.323) und die Praxis trennen Endgeräte und Gateways, die den Übergang zu einem anderen Netz ermöglichen. Erfindungsgemäß kann ein Gateway in ein Telefon (Endgerät) integriert sein. Dies ist hier dadurch ermöglicht, dass dieselbe Technik für Telefon und Gateway benutzt wird. Und obwohl beide Funktionalitäten in einem Gerät genutzt werden, bleiben sie doch völlig getrennt. Das Gateway kann sehr wohl auch von anderen Endgeräten benutzt werden, während über das eingebaute Telefon zum Beispiel über ein außen liegendes Gateway kommuniziert wird.

Da ein Gateway im Telefon schon aus Platzgründen nicht sonderlich leistungsfähig sein kann, macht die Verbindung von Telefon und Gateway nur Sinn, wenn man in der Lage ist, mehrere Gateways in einem System zu betreiben, was bei dem neuronalen System nach der Erfindung auch durchaus der Fall sein kann.

Auf der anderen Seite bietet diese Technik die Möglichkeit, ein komplettes IP-Telefonsystem in nur einem Gerät darzustellen.

Dieselbe Technik wird auch genutzt, um einen Router ins Telefon einzubauen. Ein Router ist technisch gesehen einem Gateway sehr ähnlich. Der Router hat im Gegensatz zum Gateway aber außer dem Gehäuse und der Anschlußleitung nichts mit dem Telefon gemein.

Erfindungsgemäß können Telefon, Router und Gateway in einem Gerät integriert sein. Sogar der Einbau einer Nebenstellenanlage ist bei dem System nach der Erfindung noch möglich.

### Versenden des Rufsignals

Die Rufsignale von Telefonen (Klingeln) sind in letzter Zeit zum Spielzeug des Kunden geworden. Obwohl es hunderte von verschiedenen Signalen gibt, die sogar frei programmierbar sind, ist es dabei geblieben, dass das Rufsignal im Gerät selbst erzeugt wird. Auch sogenannte VIP-Ruf-Funktionen, die besondere Signale erzeugen, wenn Rufe von bestimmten Gegenstellen hereinkommen, stellen da keine Ausnahme dar.

Das erfindungsgemäße Konzept der Versendung von Rufsignalen fußt auf der Möglichkeit, dass das Signal tatsächlich beim Rufaufbau aktiv mit verschickt wird. Der Rufende entscheidet also über das von ihm beim Empfänger erzeugte Signal. Hierbei können nach der Erfindung drei Methoden unterschieden werden, die hier lediglich an Beispielen weiter erläutert werden:

### Codesignal

Hierbei wird lediglich ein Code übergeben, der aus einem beim Empfänger vorhandenen Vorrat an Signalen eins auswählt und aktiviert. Dabei können auch mehrere Signale parallel, hintereinander oder im Wechsel ausgewählt werden. Zusatzparameter wie Lautstärke, Geschwindigkeit und Tonhöhe können ebenfalls durch den Code bestimmt werden.

### Codiertes Signal

Als codiertes Signal wird eine komplette Beschreibungssprache benutzt, die das erzeugte Rufsignal beschreibt. Hierfür eignet sich beispielsweise ein Midi-Code, der alle sinnvollen Einstellungen transportieren kann. Im allgemeinen wird man aus einem Midi-File alle Informationen (automatisch) entfernen, die durch die empfangende Einheit nicht ausgewertet werden können. Legt man diese Technik allerdings leistungsfähig genug aus, so können alle Midi-Informationen ausgewertet werden, zum Beispiel von einem mitlaufenden PC, der ankommende Rufsignale parallel auswertet.

Außer Midi sind auch eine Reihe anderer Codierungen möglich. Eine davon ist zum Beispiel das Versenden von Text, der vom empfangenen Telefon durch eine geeignete Einrichtung akustisch bspw. in Form von Sprache ausgegeben werden kann, wobei die eigentliche Umsetzung in Sprache dann auch durch einen parallel betriebenen PC geschehen kann.

### Direktes Signal

Als direktes Signal wird eine Rufsignalisierung verstanden, die sich einer Form bedient. Ein Beispiel dafür ist ein WAV-File, mit dem Sprache oder Musik komprimiert oder unkomprimiert, in Telefon- oder Hifi-Qualität, von Mono bis 5.1-kanalig transportiert werden kann. Dazu ist allerdings regelmäßig eine Bandbreite notwendig, die zumindest auch für komprimierte Telefonie benötigt wird oder sogar bis zu hocheffektiven Datenverbindungen reicht.

Dies stellt bei Telefonie in Netzwerken regelmäßig kein Problem dar und ein großer Teil der Möglichkeiten kann auch bei dem Gebrauch des Nutzkanals bei herkömmlicher Telefonie Verwendung finden.

Ein weiteres Merkmal der erfindungsgemäßen Entwicklung ist, dass der Nutzkanal, der normalerweise nur für die Sprache verwendet wird, auch für die Übertragung eines qualitativ hochwertigen Rufsignals benutzt werden kann. Bei der IP-Telefonie kann dies ein anderer logischer Kanal sein, was den Vorteil dieser Technologie unterstreicht, denn so können Rufsignale zur gleichen Zeit wie Nutzsignale übertragen werden, ggfs. auch als Anklopfsignal.

### Konferenzschaltung im Terminal

Telefonkonferenzen sind Leistungsmerkmale, die technisch gesehen außerhalb der Telefone realisiert werden. Für eine Konferenzschaltung müssen die Sprachkanäle in geeigneter Form gemischt werden. Dies geschieht bei Konferenzen im öffentlichen Netz zentralseitig in einem Rechner des Providers oder bei lokalen Konferenzen in der Nebenstellenanlage. Die H.323 sieht für die IP-Telefonie eine spezielle Einheit (MCU) für die Organisation von Konferenzen vor.

Die Aufgabe ist deshalb sehr anspruchsvoll, weil für alle Teilnehmer die Signale anders aufbereitet werden müssen. Bei einer einfachen Dreierkonferenz hört A eine Mischung von B und C, B hört A und C, C hört A und B. Sind weitere Konferenzteilnehmer hinzugeschaltet, wird diese Signalaufbereitung äußerst komplex.

Die erfindungsgemäße Konferenzschaltung im Telefon nimmt die notwendigen Schaltungen für alle Konferenzteilnehmer, die von dieser Station einberufen wurden, selbst vor. Hierdurch werden Ressourcen für die Konferenzschaltung nur dort in Anspruch genommen, wo sie wirklich gebraucht werden.

Sollte ein Konferenzteilnehmer weitere Teilnehmer einberufen, so werden diese von seinem Gerät aus geschaltet. Theoretisch kann das Konferenznetz so fast beliebig groß werden. In herkömmlichen Lösungen ist die Hinzunahme von Konferenzteilnehmern nur von einer Stelle aus möglich.

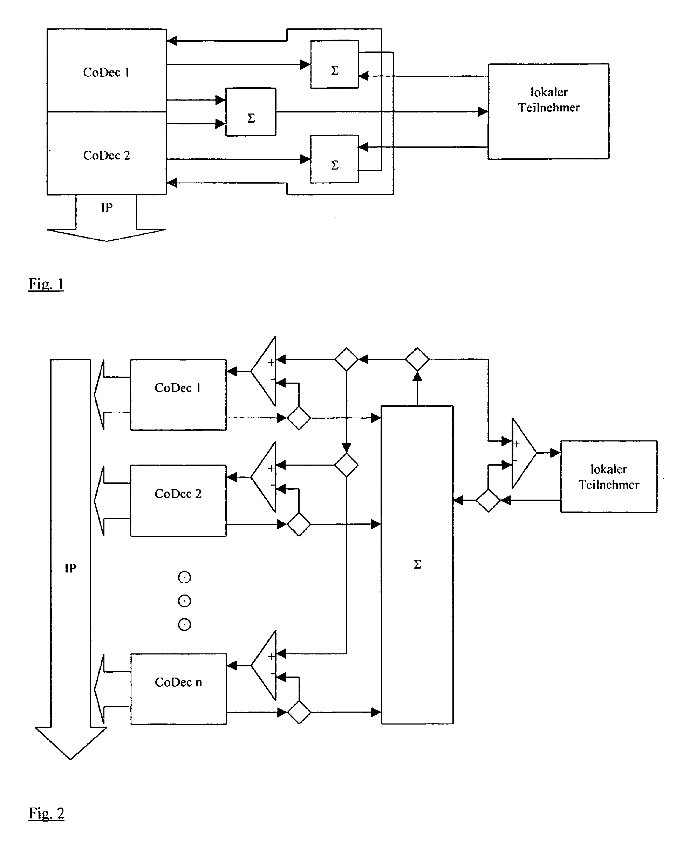

Einfache Dreierkonferenzen können, wie in den Fig. 1 und 2 schematisch dargestellt, geschaltet werden.

Die Summenbildungen ∑ können durch einfache Hardware vorgenommen werden. Falls genügend Rechenleistung zur Verfügung steht, vgl. Fig. 2, bietet es sich an, die entsprechenden Funktionen zu rechnen, da die Daten dafür ohnehin in digitaler Form vorliegen.

### Reinsprechen

Die Technik für das Trennen von Freisprecheinrichtung, Hörer und Headset und die Technik für das Versenden von Rufsignalen, bzw. deren Wiedergabe bedingt weitere Merkmale nach der Erfindung. So ist Reinsprechen ein Merkmal, das es ermöglicht, in ein laufendes Gespräch hineinzusprechen. Dies kann direkt im Hörer, dem Headset oder über die Freisprecheinrichtung geschehen. Natürlich ist dies auch möglich, wenn gerade kein Gespräch stattfindet.

Es kann entschieden werden, ob bei einem solchen Reinsprechen nur ein bestimmter Teilnehmer, beide bspw. eines Telefongesprächs oder alle mithören sollen. Die Technik hierfür liegt in der Technik für Konferenzschaltungen im Telefon.

### Background Music

Auf Grundlage der angesprochenen Technik können bei laufenden Gesprächen zusätzliche Audiosignale aufgemischt werden. Diese Hintergrundmusik kann wahlweise auch so geschaltet werden, dass nur bestimmte Teilnehmer sie hören. Dies ist ebenfalls durch die Konferenztechnik im Telefon möglich. Background Music kann im Telefon, einem zentralen Server oder einem Arbeitsplatz-PC erzeugt werden. Anstatt PCs können auch andersartige Geräte benutzt werden. Ein Server kann auch eine solche zentrale Instanz sein, die für die Telefonie solche Dienstleistungen zur Verfügung stellt. Auch ein PC, der an einem Arbeitsplatz vorgesehen ist, kann als Blackbox diese Telefonie-Dienstleistungen zur Verfügung stellen.

### Toneinspielungen

Toneinspielungen sind Tonergänzungen, die einem laufenden Gespräch hinzugemischt werden können, z.B. Fanfaren zur Ankündigung einer wichtigen Mitteilung. Technisch gesehen ist eine Toneinspielung der Background Music vergleichbar, nur dass im Fall der Toneinspielung jede Einspielung einzeln erzeugt wird. Dies kann ebenfalls direkt am Telefon, durch Abruf von einer zentralen Instanz oder durch einen Arbeitsplatz-Service (z.B. PC) erfolgen.

### Music on hold

Music on hold ist ebenfalls eine Variante von Background Music. Hierzu wird allerdings nicht die Fähigkeit der erfindungsgemäßen Konferenzschaltung im Telefon genutzt, da Music on hold nur erzeugt oder eingespielt wird, wenn das Gespräch gehalten wird. Auch Music on hold kann von dem Telefon, einer zentrale Instanz oder einem Dienst am Arbeitsplatz zur Verfügung gestellt werden.

Das Auflegen von Music on hold an einer zentralen Stelle ist allgemein bekannt. Hier wird unter Music on hold diese Technik jedoch nicht verstanden. Das besondere bei der erfindungsgemäßen Entwicklung ist, dass die Musik, die sehr wohl auch eine Ansage sein kann, insbesondere vom Telefon selbst eingespielt wird. So kann individuell, abteilungsweise oder je nach Standort ganz spezifische Music on hold benutzt oder erzeugt werden.

### Externer Prozessor

Die durch die IP-Technologie bedingte Leistungsfähigkeit ist Grundlage für die Benutzung externer Prozessoren. Die moderne Kommunikation bedingt immer weitergehendere Anforderungen und Möglichkeiten. Um ein Telefon auch bei steigenden Anforderungen immer auf dem Stand der Technik zu halten und um eine erweiterte Einbindung in umfassendere Kommunikationssysteme zu ermöglichen, besitzen die erfindungsgemäßen Telefone (Endgeräte) eine Softwareschnittstelle, die die Einbindung externer Prozessoren ermöglicht.

So können Sprachdaten online an einen externen Prozessor (z.B. PC) abgegeben und auch von dort empfangen werden. Auch können die Daten extern bearbeitet (z.B. komprimiert oder verschlüsselt) und anschließend so weiterverarbeitet werden, als hätte eine externe Bearbeitung nicht stattgefunden.

Die reine Abgabe von Informationen (z.B. Sprache zur Aufzeichnung) parallel zum eigentlichen Betrieb ist natürlich auch gegeben.

Die Anbindung an einen externen Prozessor kann zum Beispiel für die Synchronisation eines Bilddatenstroms bei der Durchführung einer Videokonferenz wichtig sein. Das Telefon kann in solchen Situationen als zentrale Bedieneinheit genutzt werden, obwohl bei der derzeit vorherrschenden Technik ein Großteil der eigentlichen Arbeit von einem PC übernommen wird.

### IP-Telefonsteuerung

Ein Telefon extern zu steuern ist in vieler Hinsicht sinnvoll. Bisherige Lösungen steuern Telefone durch eine zentrale spezialisierte Instanz, die Nebenstellenanlage. Die erfindungsgemäße Lösung unterscheidet sich hiervon deutlich.

Die IP-Technologie stellt einen speziellen Kanal zur Verfügung, über den das Endgerät (Telefon, a/b-Wandler, usw.) alle Informationen über seinen Zustand aussendet und Befehle zur Steuerung seiner Komponenten erhält.

Zustände sind z.B. ankommender Ruf, Tastendruck, Text im Display, Zustand der LEDs, Gabelschalter, Headset angeschlossen, extern ausgelöste Zustände usw.

Befehle sind z. B. Text ins Display, Ansteuerung der LEDs, Rufsignal übergeben, Sprachausgabe an alle möglichen Komponenten, Trennen, Halten, auslösen logischer Zustände usw.

Durch diese Funktionen kann eine externe Einheit die Aufgaben einer Nebenstellenanlage mit besonderer Leistungsvielfalt wahrnehmen. Dies kann eine zentrale Instanz sein (Server als PABX) oder eine lokale Einheit (z.B. PC), die vielfältigsten Einfluss auf die Telefonie nehmen können.

Die hier beschriebene erfindungsgemäße Fremdsteuerung kann ergänzend zur eigentlichen Funktionalität des neuronalen Telefonsystems Einfluss nehmen. Es ist also eine reine zentrale Steuerung möglich und auch eine ergänzende.

Auf Grundlage dieser Telefonsteuerung kann erfindungsgemäß bspw. ein TAPI-Interface realisiert werden, das über das Netzwerk die Steuerung von einem beliebigen Punkt aus ermöglicht. Es können natürlich auch alle anderen standardisierten und proprietäre Software-Interfaces realisiert werden.

### Gateway-Statistik

In besseren herkömmlichen Telefonsystemen werden statistische Daten und Gebühren erfasst, um später ausgewertet werden zu können. Das erfindungsgemäße neuronale Telefonsystem bietet diese Möglichkeit auch, jedoch kommt dafür eine andere Technik zum Einsatz, da eine zentrale Instanz zur Erledigung dieser Aufgabe fehlt.

Erfindungsgemäß speichern die einzelnen Gateway die notwendigen Daten aller Verbindungen, die über sie abgewickelt wurden. In jedem Terminal (Telefon, a/b-Wandler usw.) kann angegeben werden, wo die Daten interner Verbindungen geloggt werden sollen. Dies kann eine Komponente des Systems selbst sein oder aber auch von einem Netzwerk-PC erledigt werden. Auf diese Weise werden alle Verbindungs- und Gebührendaten zunächst dezentral gespeichert und können später auch für eine zentrale Auswertung gelesen werden, bspw. durch einen PC.

Die Besonderheit dieser Neuerung ist die dezentrale Vorhaltung des statistischen Datenbestandes.

Die Gateways des neuronalen Telefonsystems sind grundsätzlich derart ausgelegt, dass mehrere Verbindungen über einen Kanal möglich sind. Dies ist z.B. der Fall, wenn über die Routerfunktion mehrere Endstellen gleichzeitig über einen Provider im Internet geroutet werden.

Es werden in der Zukunft auch Dienste entstehen, die mehrere komprimierte Sprachverbindungen über einen Kanal in ein geeignetes Netz, gegebenenfalls auch ins oder übers Internet leiten. Derzeit ist dies bereits mit einem Gateway für Datenfestverbindungen möglich. In diesen Fällen muß ein solches Gateway mehr Verbindungen protokollieren können, als es Kanäle verwaltet. Das Konzept der dezentralen erfindungsgemäßen Systemverwaltung und die technisch vielseitigen Möglichkeiten der IP-Technologie ermöglichen auch das Dokumentieren solcher logischer Verbindungen, unabhängig von deren Zuordnung zu festen Telefonkanälen.

### Verteiltes Telefonbuch

Kennzeichen eines neuronalen Telefonsystem ist, neben der gemeinsamen Erfüllung von Aufgaben ohne Zuhilfenahme einer zentralen Instanz, die Nutzung gemeinsamer Ressourcen. Diese Nutzung erfolgt ebenfalls ohne übergeordnete Koordination. Jede Komponente eines neuronalen Telefonsystems speichert Daten für verschiedene Zwecke. Die gebräuchlichste Datensammlung stellt das telefoninterne Nummernregister (Telefonbuch) dar. Dieses Verzeichnis bewirkt die Anzeige eines Namens, wenn ein ankommender Ruf mit bekannter Nummer erfolgt.

Das verteilte Telefonbuch in einem neuronalen Telefonsystem bewirkt, dass alle Systemkomponenten alle Telefonbücher mitbenutzen können. Auch dies wird mit Netzwerkaufrufen bewirkt, die über einen Broadcast die Nummer, für welche eine Identifizierung gewünscht wird, aufrufen. Erfolgt auf diesen Aufruf keine Antwort, bleibt es bei der Anzeige der Rufnummer. Wird eine Antwort empfangen, so kommt der darin enthaltene Name zur Anzeige. Kommen mehrere Antworten zurück, so wird einer der Namen, gewöhnlich der erste, angezeigt. Da es möglich ist, dass in mehreren Telefonen des Systems dieselbe Nummer mit Namen belegt wird, kann es auch vorkommen, dass sich mehrere Stationen dann melden. Das stellt im allgemeinen kein Problem dar, da sich die Informationen (nämlich Namen) für gewöhnlich gleichen.

Bei der Eingabe von Namen in die lokalen Telefonbücher findet zur Kontrolle ein Netzaufruf statt um festzustellen, ob der Name bereits bekannt ist. In einem solchen Fall kann auf die erneute Erfassung des Namens verzichtet werden. Möchte man aber andere Informationen zu dieser Nummer hinterlegen, so kann man dies tun, da die im eigenen Telefon gespeicherten Namen immer Vorrang vor den aus dem Netz empfangenen haben, da in diesen Fällen erst gar kein Aufruf stattfindet.

Ein anderes Gerät im Netz würde aber in diesem Fall zwei Namensinterpretationen angeboten bekommen, was, wie oben bereits erwähnt, kein Problem darstellt. Eine erweiterte Spielart dieser Technik erlaubt aber auch eine teilweise Umgehung dieser Problematik. Hierzu wird jedem Telefonbucheintrag ein Kennzeichen mitgegeben werden, das Auskunft darüber gibt, ob dieser Eintrag im Netz veröffentlicht werden soll oder nicht. Ebenso kann eingestellt werden, ob ein Telefon Namensaufrufe im Netz überhaupt generiert.

Veröffentlichbare Telefonbücher können nicht nur Bestandteil eines Telefons oder jeder anderen Terminaleinrichtung sein, sie können auch zur allgemeinen Nutzung Bestandteil jeder anderen Komponente eines neuronalen Telefonsystems sein (verschiedene Gateways). Diese Komponenten weisen dann die technische Möglichkeit auf, den Namensspeicher zu sichten und zu bearbeiten. Dies wird realisiert durch Netzaufrufe zur Ausgabe und Eingabe von Informationen in und aus dem Speicher. Diese Aufrufe können begleitet werden durch einen Passwortschutz, der verschiedene Stufen des Zugriffs absichert und Missbrauch verhindert. Eine geeignete Komponente für die Bereitstellung von Namensspeichern in einem neuronalen Telefonsystem stellt natürlich jeder PC mit einer geeigneten Software dar. Das betreffende Programm muß sich dabei natürlich an dieselben Regelungen halten, die auch für den Datenverkehr der Telefoniekomponenten untereinander gelten.

### Einbeziehung von Computerprogrammen

Wie im Falle des verteilten Telefonbuches, können auch andere Funktionen prinzipiell durch PC's realisiet werden. Durch Zuhilfenahme einer Soundkarte kann ein PC sogar als Telefon benutzt werden, durch Einbau einer ISDN-Karte als Gateway, hat diese auch einen a/b-Wandler, so ist auch diese Funktionalität abgedeckt. Soll der PC aber als Komponente eines neuronalen Telefonsystems funktionieren, so muss sich die Software an die Regelungen halten, die ein solches System ausmachen.

### Einbeziehung von andersartigen Systemen

Die Technik, die dem neuronalen Telefonsystem zugrunde liegt, ist auch geeignet, andersartige Systeme einzubeziehen. Was dieses Verfahren für die Telefonie leistet, kann es bspw. auch für ein Alarmsystem tun. Es entfallen dabei die zentrale Alarmanlage und die separate Verkabelung. Alle Komponenten können sich ständig gegenseitig überwachen und über mehrere mögliche Gateways Verbindung zur Außenwelt aufnehmen. Die hohe Ausfallsicherheit eines solchen neuronalen Systems ist gerade in diesem Bereich von besonderem Vorteil. Ein weiterer interessanter Bereich ist die Hausautomation. Die Zusammenschaltung aller denkbaren Geräte, Aktoren und Sensoren, ohne Abhängigkeit von einer zentralen Instanz, bietet zahlreiche Vorteile. Als Medium für die Zusammenschaltung solcher Einheiten ist auch nicht nur das Ethernet geeignet. Als Kommunikationsnetzwerk für ein neuronales System eigenen sich auch erheblich langsamere Bussysteme, Funkstrecken und sonstige Netzwerktopologien.

Mehrere verschiedenartige Netzwerke können auch über geeignete Adapter oder Gateways miteinander verbunden werden. Wichtig ist lediglich, dass die Komponenten untereinander Informationen austauschen können und unabhängig von zentralen Instanzen bleiben. Telefonie-, Alarm- und Hausautomationssysteme können natürlich dieselben Netzwerktopologien benutzen und beliebig interagieren. Auch die Integration von breitbandigeren Diensten, wie zum Beispiel Audio und Video, stellt kein Problem dar, nur die Bandbreite der unterliegenden Topologie muss ausreichend bemessen sein.

### Quality of Service auf schmalbandigen Festverbindungen

Packetierte Sprachdaten können in einem breitbandigen Netzwerk, wie dies im Ethernet (10 bis 1000 Mbit/s) der Fall ist, problemlos "nebenher" übertragen werden. Sinkt die Bandbreite, häufen sich auch die möglichen Probleme. Im schlimmsten Fall kann ein Medium derartig ausgelastet werden, dass kein Platz mehr für den Sprachverkehr bleibt. Aber auch auf schmalbandigen Leitungen ergibt sich bedingt durch die Paketstruktur nach kurzer Zeit die Gelegenheit, ein Sprachpaket durchzuleiten. Aber selbst ein einzelnes Sprachdatenpaket braucht auf einer schmalbandigen Leitung soviel Zeit, dass sich schon daraus signifikante Verzögerungszeiten ergeben.

In der Praxis hat es sich gezeigt, dass Sprachdatenpakete auf schmalbandigen Leitungen dann zufriedenstellend zu transportieren sind, wenn das nachstehend erläuterte erfindungsgemäße Verfahren verwendet wird.

Das Medium besteht aus einer Datenfestverbindung vom Typ D64S mit einer Datenrate von 64Kbit/s. Die Sprachverbindung nutzt eine Datenrate von 8Kbit/s netto (durch Kompression). Eine einzelne Sprachverbindung würde durch den IP-Protokolloverhead 15% der Bandbreite benötigen. Die sich ergebenden Verzögerungszeiten durch quasigleichzeitig laufende Datenpakete, die eine Länge von 1,5 Kbyte erreichen können, sind auf einer solchen Leitung üblicherweise indiskutabel lang.

Die nach dem hier beschriebenen Verfahren arbeitenden Geräte, auf beiden Seiten der Verbindung, unterteilen die serielle Verbindung in mehrere, quasi gleichzeitig bestehende Kanäle im Zeitmultiplexverfahren, bspw. in acht, was acht Kanäle zu 8Kbit/s ergibt. Die beiden an der Verbindung beteiligten Geräte nutzen die Verbindung auch zur Verständigung untereinander. Die Unterteilung in acht Kanäle spielt nur eine Rolle im Datenverkehr zwischen den beiden Geräten; nach außen hin hat dieses Verfahren keine Auswirkung.

Das Zeitmultiplexing, welches die Unterteilung in die Einzelkanäle bewirkt, erzeugt keinerlei Overhead. Es liegt nur eine feste zeitliche Zuordnung einzelner übertragener Bits zu den Kanälen vor. Das erste Bit gehört zu Kanal eins, das zweite zu Kanal zwei usw.. Bit Nummer neun ist dann das zweite Bit des ersten Kanals, Bit Nummer zehn das zweite Bit des zweiten Kanals usw. Die Anzahl der Kanäle ist im Prinzip frei bleibend, es ist auch nicht zwingend notwendig, dass die Bandbreiten der Kanäle gleich sind.

In diesem Beispiel passen acht Kanäle zu 8Kbit/s exakt zu der Leitung mit 64Kbit/s, zumal 8Kbit/s auch genau die Bandbreite ist, die man für einen Telefonkanal (bei Verwendung einer entsprechenden Kompression) benötigt. Die Sprachdatenpakete werden ohne weiteren IP-Overhead über einen (oder mehrere) der einzelnen Kanäle isochron übertragen. Dabei ist es sinnvoll, dass für einen isochronen Kanal nicht mehr Bandbreite zur Verfugung gestellt wird, als wirklich benötigt wird.

Wie viele Kanäle für die Übertragung von Sprachdaten reserviert werden, handeln die beiden Geräte untereinander aus, wofür ein beliebiger der Kanäle zur Verfügung steht, über den aber auch normale IP-Datenpakete über die restliche Bandbreite mitgesendet werden können. Neben den für die Telefonie reservierten Kanälen wird der gesamte Rest an Bandbreite gewöhnlich für die normale Datenkommunikation zur Verfügung gestellt. Damit stellt man sicher, dass eine normale Datenkommunikation immer stattfinden kann, auch wenn die Bandbreite noch so gering ist. Solange Sprachdatenkanäle zur Verfügung gestellt werden, sind diese verzögerungsfrei in bester Qualität vorhanden. Sollten mehr Telefonie-Kanäle angefragt werden als zur Verfügung stehen können (in diesem Beispiel sieben, denn der achte wird für die Datenverbindungen mindestens benötigt), werden diese Verbindungen nicht zugelassen, wie das auch bei einer belegten normalen Telefonleitung der Fall ist.

Ein besonderes Merkmal dieses Verfahrens ist, dass die Sprachdatenpakete vor der Übertragung über die isochronen Kanäle aus den IP-Paketen ausgepackt werden. Die Netto-Daten gehen dann direkt über den isochronen Kanal zur Gegenstelle, wo sie für den weiteren Transport wieder in IP-Pakete verpackt werden. Auf diese Weise werden Sprachdaten bevorzugt nur zu Lasten des Datenverkehrs bearbeitet. Ohne dieses Verfahren wäre eine Übertragung von Sprache über solche schmalbandigen Leitungen in brauchbarer Qualität nicht möglich. Das beschriebene Beispiel eignet sich natürlich nicht nur für den Daten- und Sprachverkehr über 64Kbit/s-Standleitungen, sondern auch über einen ISDN-Kanal.

### Internet-Doppelweg-Telefonie

Es existieren derzeit keine Telefone, mit denen es möglich wäre, Verbindungen über das Internet und gewöhnliche Telefon- oder ISDN-Leitungen zu betreiben. Machbar ist dies derzeit nur mit PC-gestützten Systemen, da diese alle Voraussetzungen für eine Internet-Anbindung und Telefonie mitbringen. Allerdings braucht man dafür eine Soundkarte, eine ISDN- oder Modemkarte, ein Headset und eine sehr spezielle Software.

Internet-Telefonie ist derzeit nicht in vernünftiger Form machbar, weil die Teilnehmer keine feste IP-Adresse haben, sie sind aus dem Netz nicht unmittelbar anrufbar. Es kann jedoch die nachstehend beschriebene Prozedur mit einem entsprechend ausgestatteten PC durchgeführt werden, was jedoch sehr aufwendig ist und für die der PC immer angeschaltet sein muß, um als normales Telefon benutzt werden zu können. Das erfindungsgemäße Gerät ist letztlich jedoch doch nur ein Telefon.

Eine Voraussetzung für die Telefonie nach der Erfindung ist, dass beide Teilnehmer ein erfindungsgemäße Geräte besitzen. A ruft B an, dies geschieht über den normalen Telefonkanal/ISDN-Anschluss. Dieser Anruf signalisiert schon vor dem Verbindungsaufbau, dass die eigentliche Verbindung über das Internet abgewickelt werden soll. Hierfür gibt es verschiedene Möglichkeiten:
1. Es wird eine besondere Telefonnummer benutzt (im ISDN hat jeder Anschluss mehrere)
2. Es wird das Leistungsmerkmal UUS 1 im ISDN zur Übermittlung des Sonderwunsches benutzt.
3. Der Sonderwunsch wird nach Verbindungsaufbau durch Übersendung eines Codes übertragen.
4. Die Umschaltung auf Internet-Betrieb wird von A und B manuell am Gerät vorgenommen, nachdem man sich auf diesen Weg geeinigt hat.

Beide Telefone wählen sich nun ins Internet ein. Dafür werden die im Gerät fest eingegebenen Parameter benutzt (Telefonnummer, Username, Passwort, URL). Telefonat und Internet-Verbindung sind gleichzeitig möglich, da das erfindungsgemäße Gateway- Telefon zwei gleichzeitige Verbindungen erlaubt. Hat der Benutzer ein neuronales Telefonsystem, ist die hier beschriebene Technik mit allen Telefonen des Systems möglich, auch wenn sie kein eingebautes Gateway haben.

Die beiden Telefone melden sich nun bei einem Server eines Dienstleisters an, der irgendwo auf der Welt stehen kann und eine sehr einfache Aufgabe erfüllt. In Fällen, wo Teilnehmer einer geschlossenen Gruppe (Firma) miteinander kommunizieren wollen, wird die jeweilige Organisation einen eigenen Server installieren.

A und B melden sich nun mit ihrer derzeitig aktuellen IP-Adresse und ihrer Telefonnummer bei diesem Server an. Dabei fragen sie nach der jeweiligen Nummer des anderen, die ihnen ja bekannt ist, weil sowohl im ISDN, als auch im analogen Telefonnetz die Rufnummern der Anrufer übermittelt werden können. Der Server meldet nun die IP-Adresse des jeweiligen Gegenparts zurück und damit ist seine Aufgabe auch schon beendet. Danach können sich die beiden Telefone im Internet die Sprachdatenpakete direkt zusenden, da sie nun die IP-Adresse kennen. Die Gatewaytelefone können jederzeit zwischen den beiden Verbindungsarten Internet und Telefon wechseln. Es kann auch auf eine eventuell schon bestehende Datenverbindung ins Internet zurückgegriffen werden, es ist nicht unbedingt notwendig, eine eigene hierfür aufzubauen. Diese Lösung bietet eine echte Internet- Telefonlösung, keine Insellösung. Man kann tatsächlich wie mit einem gewöhnlichen Telefon über das Internet normal telefonieren.

### Gruppenbildung in neuronalen Telefonsystemen

In neuronalen Telefonsystemen lassen sich sogenannte Gruppen sehr effektiv bilden. Jedes Telefon kann nicht nur eine Rufnummer besitzen, unter der es erreichbar ist, es können deren mehrere sein, beispielsweise 6. Haben mehrere Telefone die gleiche Nummer, so bilden sie damit automatisch eine Gruppe. Ein Telefon kann auch Mitglied mehrerer Gruppen sein.

Wird eine Gruppennummer angewählt, so klingeln alle Telefone dieser Gruppe. Wer zuerst abhebt, nimmt das Gespräch entgegen. Hierzu muß schon beim Verbindungsaufbau, also während es klingelt, eine logische Verbindung zwischen Anrufer und Gerufenem bestehen. Der Anrufer, egal ob Telefon oder Gateway, kann aber aus Gründen der Kompatibilität mit dem Protokoll H.323 nur eine logische Verbindung unterhalten, nicht beliebig viele.

Diese technische Problematik wird nach der Erfindung wie nachstehend erläutert gelöst: Ein Telefon, das erfolgreich unter einer Rufnummer angerufen wurde, erzeugt sofort einen weiteren Ruf mit derselben Rufnummer. Hierdurch ist festgelegt, dass jedes Telefon maximal nur zwei Verbindungen managen muß, nämlich den erhaltenen und den erzeugten Anruf. Nimmt in dieser beliebig langen Kette nun ein Telefon den Ruf an, so meldet es dies dem Rufenden und damit geht die Information die ganze Kette zurück. Die eigentliche Sprechverbindung wird dann zwischen den korrekten Endpunkten aufgebaut.

Das Telefon gibt die Annahmemeldung aber nicht nur zurück, sondern auch nach vorn. Damit wird die folgende Kette von Telefonen in der Gruppe informiert, dass der Ruf nicht mehr anliegt.

Eine alternative Methode ist das nicht ganz einer Norm konforme Klingeln ohne logische Verbindung. Hier hören alle Telefone den Ruf mit ihrer Nummer und klingeln, ohne dass dafür eine logische Verbindung aufgebaut wird. Dies erfolgt erst, wenn ein Telefon abgehoben wird und diesen Vorgang zurückmeldet.

Alle bisher bekannten Methoden der Gruppenbildung gehen von einer zentralen Verwaltung der Gruppen in einem Gatekeeper, einer Nebenstellenanlage, auf einem Server oder in einem speziellen Gateway aus. Die hier beschriebene Methode ist sehr viel flexibler, weil sie keinerlei Verwaltung benötigt.

## Patentansprüche

1. Telefonsystem bestehend aus Gateways und Terminals verbunden durch ein Computernetzwerk, **dadurch gekennzeichnet, daß** das Telefonsystem dadurch erweiterbar ist, daß Gateways oder Terminals funktional in das Netzwerk eingefügt werden können und dieses dadurch realisiert ist, daß Gateways und Terminals derart ausgestaltet sind, daß sie beim Versuch einen Ruf aufzubauen, durch Broadcast-Meldungen alle anderen Gateways und Terminals des Telefonsystems informieren.

2. Telefonsystem entsprechend Anspruch 1, **dadurch gekennzeichnet,**
**dass** alle Komponenten untereinander, und über Gateways auch in leitungsvermittelte Netze, Telefonverbindungen aufbauen und abbauen können.

3. Telefonsystem nach einem oder mehreren der vorangehenden Ansprüche, **dadurch gekennzeichnet,**
**dass** der Auf- und Abbau von Verbindungen über Broadcast-Meldungen im Netzwerk mitgeteilt wird.

4. Telefonsystem nach einem oder mehreren der vorangehenden Ansprüche, **dadurch gekennzeichnet,**
**dass** die Nutzung eines dezentralen Gateways von den Verbindungskosten und/oder der Qualität der Verbindung abhängig gemacht wird.

5. Telefonsystem nach einem oder mehreren der vorangehenden Ansprüche mit Terminals als Telefone, **dadurch gekennzeichnet,**
**dass** alle akustischen Signalwege über eigene Codecs auf separate Verbindungen im Computernetzwerk führen.

6. Telefonsystem nach einem oder mehreren der vorangehenden Ansprüche, **dadurch gekennzeichnet,**
**dass** zur Realisierung von Telefonzentralfunktionen Broadcast-Meldungen im Netz verschickt und empfangen werden.

7. Telefonsystem nach einem oder mehreren der vorangehenden Ansprüche, **dadurch gekennzeichnet,**
**dass** Gateway und Terminal und/oder Router in einer physikalischen Einheit realisiert werden.

8. Telefonsystem nach einem oder mehreren der vorangehenden Ansprüche, **dadurch gekennzeichnet,**
**dass** der rufende Teilnehmer das Rufsignal an den gerufenen Teilnehmer verschickt.

9. Telefonsystem entsprechend Anspruch 8, **dadurch gekennzeichnet,**
**dass** eines oder mehrer der folgenden Möglichkeiten für die Rufsignalerzeugung genutzt wird:
- es wird ein Code gesendet, der aus einem Vorrat beim Empfänger ein Signal auswählt.
- es wird ein Code in Form einer Signalbeschreibung z.B. im Midi-Format gesendet
- das Rufsignal selbst wird als PCM-Signal oder WAV-Datei gesendet

10. Telefonsystem nach einem oder mehreren der vorangehenden Ansprüche, **dadurch gekennzeichnet,**
**dass** für das Ruf- oder Anklopfsignal ein getrennter logischer Kanal auf dem Computernetzwerk verwendet wird. Hierdurch ist auch ein Reinsprechen während laufender Verbindungen möglich.

11. Telefonsystem nach einem oder mehreren der vorangehenden Ansprüche, **dadurch gekennzeichnet,**
**dass** eine Konferenzschaltung im Terminal realisiert ist für alle Konferenzteilnehmer, die von dieser Station aus einberufen wurden.

12. Telefonsystem nach einem oder mehreren der vorangehenden Ansprüche, **dadurch gekennzeichnet,**
**dass** dezentral Background Music, Toneinspielungen und Music on Hold eingespielt wird, so dass je nach Abteilung oder Standort verschiedene Einspielungen realisiert werden können.

13. Telefonsystem nach einem oder mehreren der vorangehenden Ansprüche, **dadurch gekennzeichnet,**
**dass** rechenintensive Arbeiten von einem Terminal oder Gateway an einen externen Prozessor weitergeleitet werden, der über eine Softwareschnittstelle mit dem Terminal kommuniziert.

14. Telefonsystem nach einem oder mehreren der vorangehenden Ansprüche, **dadurch gekennzeichnet,**
**dass** Terminals und Gateways zusätzlich zu den Datenkanälen mindestens einen Informations- und einen Steuerungskanal enthalten. Hierüber können Informationen zu den Zuständen von Terminals und Gateways gesammelt werden und eine Fremdsteuerung von Terminals und Gateways erreicht werden.

15. Telefonsystem nach einem oder mehreren der vorangehenden Ansprüche, **dadurch gekennzeichnet,**
**dass** Gateways die über diese laufenden Verbindungen protokollieren und dezentral Informationen über Verbindungs- und Gebührendaten vorhalten.

16. Telefonsystem nach einem oder mehreren der vorangehenden Ansprüche, **dadurch gekennzeichnet,**
**dass** dezentrale Telefonbücher vorgehalten werden und bei missglückter Suche in einem dezentralen Telefonbuch in einem oder mehreren anderen Telefonbüchern weitergesucht wird.

17. Telefonsystem nach einem oder mehreren der vorangehenden Ansprüche, **dadurch gekennzeichnet,**
**dass** weitere Anwendungen dadurch realisiert werden können, indem dezentrale Alarmsysteme und Hausautomatisierungsgeräte mit einbezogen werden.

18. Telefonsystem nach einem oder mehreren der vorangehenden Ansprüche, **dadurch gekennzeichnet,**
**dass** bei schmalbandigen Verbindungen Kommunikationskanäle mit fester Bandbreite benutzt werden und nur die reinen Nutzdaten aus den IP-Paketen übertragen werden.

19. Telefonsystem nach einem oder mehreren der vorangehenden Ansprüche, **dadurch gekennzeichnet,**
**dass** Gruppenrufe dadurch realisiert werden,
**dass** der Ruf von einem zum anderen Telefon weitergereicht wird und beim Abheben rückwärts signalisiert wird, wer nun der Kommunikationspartner ist oder alternafv
beim Abheben alle anderen Terminals darüber informiert werden, das kein Ruf mehr anliegt.

## Claims

1. A telephone system consisting of gateways and terminals connected via a computer network, **characterised in that** the telephone system can be expanded by functionally adding gateways or terminals to the network and **in that** this can be realised by configuring gateways and terminals in such a way that in the attempt of establishing a call they inform all other gateways and terminals by broadcast messages.

2. The telephone system according to claim 1, **characterised in that** all components can establish and terminate telephone connections among themselves andalso, via gateways, in line-switched networks.

3. The telephone system according to one or more preceding claims, **characterised in that** establishing and terminating connectionsis broadcast in the network via broadcast messages.

4. The telephone system according to one or more preceding claims, **characterised in that** utilising a decentralised gateway is made dependent upon the costs and/or quality of the connection.

5. The telephone system according to one or more preceding claims whereby terminals are telephones, **characterised in that** all acoustic signal paths lead to separate connections in the computer networkvia own codecs.

6. The telephone system according to one or more preceding claims, **characterised in that** central telephone functions are realised by sending and receiving broadcast messages in the network.

7. The telephone system according to one or more preceding claims, **characterised in that** a gateway and a terminal and/or a router are realised in one physical unit.

8. The telephone system according to one or more preceding claims, **characterised in that** the calling subscriber sends the call signal to the called subscriber.

9. The telephone system according to claim 8, **characterised in that** one or more of the following possibilities are utilised for call signal generation:
- a code is sent which selects a signal from a signal store at the receiver
- a code is sent in the form of a signal description,for example in midi format
- the call signal itself is sent as a PCM signal or a .WAV file.

10. The telephone system according to one or more preceding claims, **characterised in that** a separate logical channel is used in the computer network for a call or call waiting signal. This enables calling-in to be used during a live connection.

11. The telephone system according to one or more preceding claims, **characterised in that** a conference circuit is realised in the terminal for all conference participants called from this station.

12. The telephone system according to one or more preceding claims, **characterised in that** background music, sound bites and music-on-hold can be recorded so that depending on the department or location different recordings can be realised.

13. The telephone system according to one or more preceding claims, **characterised in that** CPU-intensive work can be forwarded from a terminal or gateway to an external processor which communicates with the terminal via a software interface.

14. The telephone system according to one or more preceding claims, **characterised in that** terminals and gateways, in addition to data channels, contain at least one information channel and one control channel. These channels can be used to collect information on the conditionof terminals and gateways and to achieve control of terminals and gateways from outside.

15. The telephone system according to one or more preceding claims, **characterised in that** gateways make recordings via these live connections and decentrally maintain information on connection and charge data.

16. The telephone system according to one or more preceding claims, **characterised in that** decentralised telephone books are maintained, and if a search in a decentralised telephone book is unsuccessful, it can be continued in one or several other telephone books.

17. The telephone system according to one or more preceding claims, **characterised in that** further applications can be realised by including decentralised alarm systems and home automation appliances.

18. The telephone system according to one or more preceding claims, **characterised in that** for narrowband connections communication channels with a fixed band width can be used and the only data transferred from IP packets ispure usage data.

19. The telephone system according to one or more preceding claims, **characterised in that** the call is passed from one telephone to another,and upon answering a signal is sent in reverse direction on who is the communication partner is, or alternatively upon answering, all terminals are informed that no further call is present.

## Revendications

1. Système téléphonique se composant de passerelles et de terminaux reliés par un réseau informatique, **caractérisé en ce que** le système téléphonique peut être étendu **en ce qu'**il est possible d'intégrer des passerelles ou des terminaux de manière fonctionnelle dans le réseau et **en ce que** cela est réalisé **en ce que** des passerelles et terminaux sont conçus de manière à ce que, lors de la tentative de réaliser un appel, ils informent toutes les autres passerelles et tous les autres terminaux du système téléphonique grâce à des messages de diffusion.

2. Système téléphonique selon la revendication 1, **caractérisé en ce que** tous les composants peuvent établir entre eux, et via des passerelles, également dans des réseaux à circuits commutés, des communications téléphoniques, et les couper.

3. Système téléphonique selon l'une ou plusieurs des revendications précédentes, **caractérisé en ce que** l'on fait part de l'établissement et de la coupure des communications par l'intermédiaire de messages de diffusion.

4. Système téléphonique selon l'une ou plusieurs des revendications précédentes, **caractérisé en ce que** l'utilisation d'une passerelle décentralisée est rendue dépendante des coûts de communication et/ou de la qualité de la communication.

5. Système téléphonique selon l'une ou plusieurs des revendications précédentes avec des terminaux en tant que téléphones, **caractérisé en ce que** toutes les voies de signalisation acoustique sont acheminées via des codecs propres dans des communications séparées dans le réseau informatique.

6. Système téléphonique selon l'une ou plusieurs des revendications précédentes, **caractérisé en ce que**, pour la réalisation de fonctions téléphoniques centralisées, des messages de diffusion sont envoyés et réceptionnés dans le réseau.

7. Système téléphonique selon l'une ou plusieurs des revendications précédentes, **caractérisé en ce que** des passerelles et terminaux et/ou routeurs sont réalisés en une unité physique.

8. Système téléphonique selon l'une ou plusieurs des revendications précédentes, **caractérisé en ce que** l'intervenant qui appelle envoie le signal d'appel à l'intervenant appelé.

9. Système téléphonique selon la revendication 8, **caractérisé en ce que** l'on utilise une ou plusieurs des possibilités suivantes pour la génération d'un signal d'appel :
- envoi d'un code, lequel sélectionne un signal dans une réserve chez le destinataire,
- envoi d'un code sous forme d'une description de signal, par exemple au format Midi,
- envoi du signal d'appel lui-même en tant que signal PCM ou fichier WAV.

10. Système téléphonique selon l'une ou plusieurs des revendications précédentes, **caractérisé en ce que** l'on utilise un canal logique distinct dans le réseau informatique pour le signal d'appel ou d'appel en instance. De cette manière, il est également possible d'intervenir en parlant pendant une communication en cours.

11. Système téléphonique selon l'une ou plusieurs des revendications précédentes, **caractérisé en ce qu'**une commutation de conférence est réalisée dans le terminal pour tous les intervenants d'une conférence, lesquels ont été convoqués à partir de cette station.

12. Système téléphonique selon l'une ou plusieurs des revendications précédentes, **caractérisé en ce que** l'on insère de manière décentralisée une musique en toile de fond, des enregistrements sonores et de la musique d'attente, de sorte qu'en fonction du secteur ou de l'emplacement, il est possible de réaliser des insertions différentes.

13. Système téléphonique selon l'une ou plusieurs des revendications précédentes, **caractérisé en ce que** des tâches à calculs importants sont retransmises par un terminal ou une passerelle à un processeur externe, lequel communique via une interface applicative avec le terminal.

14. Système téléphonique selon l'une ou plusieurs des revendications précédentes, **caractérisé en ce que** des terminaux et des passerelles contiennent, en plus des canaux de données, au moins un canal d'information et de commande. Par ce biais, des informations concernant les états de terminaux et de passerelles peuvent être collectées, et il est possible d'obtenir une commande tierce de terminaux et de passerelles.

15. Système téléphonique selon l'une ou plusieurs des revendications précédentes, **caractérisé en ce que** des passerelles journalisent des communications passant par celles-ci et mettent à disposition de manière décentralisée des informations sur des données concernant des communications et des redevances.

16. Système téléphonique selon l'une ou plusieurs des revendications précédentes, **caractérisé en ce que** des annuaires téléphoniques décentralisés sont mis à disposition et **en ce qu'**en cas d'échec d'une recherche dans un annuaire téléphonique décentralisé, on continue de chercher dans un ou plusieurs autres annuaires téléphoniques.

17. Système téléphonique selon l'une ou plusieurs des revendications précédentes, **caractérisé en ce que** d'autres applications peuvent être réalisées **en ce que** des systèmes d'alarme décentralisés et des appareils de domotique sont également pris en compte.

18. Système téléphonique selon l'une ou plusieurs des revendications précédentes, **caractérisé en ce qu'**en cas de communications à bandes étroites, on utilise des canaux de communication à largeur de bande fixe et transmet seulement les données purement utiles provenant des paquets IP.

19. Système téléphonique selon l'une ou plusieurs des revendications précédentes, **caractérisé en ce que** des appels de groupe sont réalisés **en ce que** l'appel est retransmis d'un téléphone à l'autre et **en ce qu'**en décrochant, on signale en retour qui est alors le partenaire de communication, ou bien en variante, **en ce qu'**en décrochant, tous les autres terminaux sont informés qu'il n'y a plus d'appel.
